# EUROPÄISCHE PATENTSCHRIFT

(11) **EP 1 968 031 B1**
(45) Veröffentlichungstag und Bekanntmachung des Hinweises auf die Patenterteilung: **19.01.2011**
(21) Anmeldenummer: 07103614.9
(22) Anmeldetag: 06.03.2007
(51) Int. Cl.: G09F 3/03

(54) **Plombierring**
Sealing ring
Bague de plombage

(43) Veröffentlichungstag der Anmeldung: 10.09.2008
(73) Patentinhaber: Allmess GmbH, 23758 Oldenburg (DE)
(72) Erfinder: Vogler, Bernd, 23617 Stockelsdorf (DE)
(74) Vertreter: UEXKÜLL & STOLBERG

(56) Entgegenhaltungen:
- DE-U1- 9 114 375

## Beschreibung

Die vorliegende Erfindung betrifft einen Plombierring zur Sicherung einer in einem Anschlußgehäuse befestigten Meßkapsel eines Durchflußmessers, insbesondere eines volumetrischen Durchflußmessers, gegen ein unbefugtes Entfernen.

Durchflußmesser, wie etwa volumetrische Durchflußmesser oder Durchflußmengenzähler, sind in verschiedenen Formen bekannt und werden in verschiedenen Gebieten verwendet. So werden beispielsweise Gas- und Wassermengenmeßeinrichtungen von Versorgungs- und Abrechnungsunternehmen in allen Bereichen der Wirtschaft, des öffentlichen Lebens und in Haushalten eingesetzt, um die verbrauchten Gas- und Wassermengen zu ermitteln. Derartige Durchflußmesser weisen üblicherweise ein in einer Rohrleitung installiertes Anschluß- bzw. Zählergehäuse auf, in das unmittelbar oder über einen geeigneten Adapter eine Meßkapsel eingeschraubt ist. Dabei ist es von großer Bedeutung, eine Entfernung der Meßkapsel aus dem Anschlußgehäuse und eine Manipulation an der Meßkapsel durch unbefugte Personen zu verhindern oder zumindest irreversible Anzeichen für den Versuch einer derartigen Manipulation zu schaffen.

Zu diesem Zweck sind verschiedene Plombiereinrichtungen bekannt, die beispielsweise die Form eines Plombierrings annehmen können und das Herausschrauben der Meßkapsel aus dem Anschlußgehäuse verhindern sollen. Derartige Plombierringe weisen gewöhnlich einen Ring- oder Schürzenabschnitt auf, der bei geeignet positioniertem Plombierring eine an der Meßkapsel selbst oder an einem Befestigungsring zur Befestigung der Meßkapsel an bzw. in einem Anschlußgehäuse vorgesehene Schraubprofilierung abdeckt. Diese Schraubprofilierung, die etwa in Form von entlang des Umfangs der Meßkapsel oder des Befestigungsrings angeordneten Montagenocken vorgesehen sein kann, dient zur Aufnahme eines geeigneten Montagewerkzeugs, das in die Schraubprofilierung eingreifen und zum Herausschrauben bzw. Entfernen der Meßkapsel aus dem Anschlußgehäuse verwendet werden kann. Dies wird durch den Plombierring verhindert, der erst entfernt werden muß, bevor das Montagewerkzeug in die Schraubprofilierung eingreifen kann.

Da diese Durchflußmengenzähler zumeist versenkt unterhalb der Wandoberfläche installiert sind, ist es häufig ausreichend, wenn die Seite, auf der das Zählwerk positioniert ist bzw. die der Wandoberfläche zugewandt ist, durch den Plombierring gegen Manipulationsversuche geschützt und die Schraubprofilierung durch ihn so weit abgedeckt wird, daß ein Ansetzen eines axial angreifenden Werkzeuges nicht möglich ist. Üblicherweise ist der schürzenartige Ringabschnitt aber so dimensioniert, daß er die Schraubprofilierung auch seitlich abdeckt und das Ansetzen eines seitlich angreifenden Werkzeugs verhindert.

Die bekannten Plombierringe weisen z.B. hakenförmige Rastabschnitte, die in entsprechende, an der Meßkapsel vorgesehene Aussparungen eingreifen, und/oder Aussparungen auf, in die an der Meßkapsel vorgesehene, z.B. hakenförmige Rastabschnitte eingreifen, so daß der Plombierring durch Aufschieben über die Meßkapsel in einer vorbestimmten, die Schraubprofilierung abdeckenden Position an der Meßkapsel fixiert werden kann. Die Rastabschnitte sind dabei so ausgebildet, daß der Plombierring ohne eine irreversible Beschädigung oder Zerstörung der Rastabschnitte oder eines anderen Bereichs des Plombierrings nicht wieder entfernt werden kann. Auf diese Weise ist es möglich, ein unbefugtes Entfernen des Plombierrings bzw. der Meßkapsel in einfacher Weise festzustellen.

Bei dem regelmäßig zur Sicherstellung einer fehlerfreien Verbrauchsmessung erforderlichen Austausch der Meßkapseln durch das jeweilige Versorgungs- oder Abrechungsunternehmen werden diese Plombierringe zerstört, die alte Meßkapsel aus dem Anschlußgehäuse herausgeschraubt, eine neue Meßkapsel in das Anschlußgehäuse eingeschraubt und ein neuer Plombierring montiert. Dieser Austausch ist für die Versorgungs- bzw. Abrechungsunternehmen mit einem hohen Aufwand verbunden und muß - auch aufgrund der ggf. bestehenden Notwendigkeit der vorübergehenden Unterbrechung der Gas- und Wasserversorgung beim Kunden - so einfach und schnell wie möglich zu bewerkstelligen sein.

Es hat sich gezeigt, daß bei bekannten Plombierringen schon während des Einbaus die Gefahr besteht, daß sie bei der Montage beschädigt werden, so daß die Montage kompliziert, relativ langwierig und mit hohem Aufwand verbunden ist und häufig mehrere Plombierringe verbaut werden müssen. Zudem sind viele bekannte Plombierringe kompliziert aufgebaut und daher teuer in der Herstellung. Außerdem sind für viele bekannte Plombierringe spezielle Montagewerkzeuge erforderlich, die die Komplexität und Kosten der Montage weiter erhöhen. Schließlich müssen viele bekannte Plombierringe aufgrund der einander zugeordneten Aussparungen und z.B. hakenförmigen Rastabschnitte an Plombierring bzw. Meßkapsel in einer vorgegebenen Ausrichtung in Bezug auf die Meßkapsel montiert werden, was einen zusätzlichen Montageaufwand bedeutet.

DE 9114375 U1 offenbart einen Plombierring gemäß dem oberbegriff des vorliegenden Anspruche 1.

Es ist Aufgabe der vorliegenden Erfindung, einen einfach und kostengünstig herzustellenden Plombierring bereitzustellen, der so ausgestaltet ist, daß eine einfache und schnelle Montage ohne die Gefahr einer Beschädigung und ohne die Notwendigkeit der Verwendung eines speziellen Montagewerkzeugs möglich ist.

Zur Lösung dieser Aufgabe dienen die Merkmale von Patentanspruch 1. Vorteilhafte Ausführungsformen des Plombierrings sind Gegenstand der zugehörigen Unteransprüche.

Nach der vorliegenden Erfindung ist vorgesehen, daß ein Plombierring zur Sicherung einer in einem Zähler- bzw. Anschlußgehäuse befestigten Meßkapsel eines, insbesondere volumetrischen, Durchflußmessers gegen ein unbefugtes Entfernen einen kreisringförmigen Basisabschnitt zur Abdeckung einer Schraubprofilierung einer Meßkapsel oder einer Schraubprofilierung eines Befestigungsrings zur Befestigung einer Meßkapsel in einem Anschlußgehäuse aufweist. Unter "kreisringförmig" ist dabei in üblicher Weise zu verstehen, daß der Basisabschnitt ringförmig geschlossen ist und einen kreisförmigen Querschnitt aufweist. Der Basisabschnitt erstreckt sich von einem ersten Rand zu einem zweiten Rand, der entlang der Achse des Basisabschnitts, d.h. entlang der Ringachse bzw. der Symmetrieachse des kreisringförmigen Basisabschnitts, von dem ersten Rand beabstandet ist, so daß der Basisabschnitt eine axiale Erstrekkung aufweist. Der Basisabschnitt ist bevorzugt in Form einer umlaufenden Wandung vorgesehen.

Der Plombierring weist ferner einen ringsegmentförmigen Einschnappabschnitt auf. Unter "ringsegmentförmig" ist in diesem Zusammenhang zu verstehen, daß sich der Einschnappabschnitt über weniger als 360° erstreckt. Dabei muß der ringsegmentförmige Einschnappabschnitt nicht ein Segment eines durch einen radial inneren und einen radial äußeren Kreis begrenzten Kreisrings sein. Vielmehr können der radial innere und der radial äußere Rand des Einschnappabschnitts auch von einem Kreisabschnitt abweichende Verläufe haben. Der Einschnappabschnitt geht von dem zweiten Rand des Basisabschnitts aus und verläuft von dem ersten und dem zweiten Rand des Basisabschnitt weg schräg in Richtung auf die Achse des Basisabschnitts. Mit anderen Worten weist der Einschnappabschnitt einen radial äußeren Rand, der mit einem entsprechenden Bereich des zweiten Randes des Basisabschnitts zusammenfällt oder an diesem befestigt ist, und einen radial inneren Rand auf, der von dem zweiten Rand das Basisabschnitts beabstandet ist und näher an der Ringachse liegt, d.h. dem zweiten Rand des Basisabschnitts gegenüberliegt bzw. entgegengesetzt ist. Dabei verläuft der äußere Rand bevorzugt in einem konstanten radialen Abstand zu dem inneren Rand, muß es aber nicht. Der Verlauf des Einschnappabschnitts weist demnach eine axiale Komponente, die von dem Basisabschnitt weggerichtet ist, und eine radiale Komponente auf, die nach innen auf die Ringachse gerichtet ist. Im Rahmen dieser Anmeldung beziehen sich Angaben wie "innen" und "außen" immer auf die Ringachse, d.h., daß z.B. ein weiter innen liegender Bereich näher an der Ringachse angeordnet ist als ein weiter außen liegender Bereich.

Es ist darauf hinzuweisen, daß es möglich ist, daß der zweite Rand des Basisabschnitts lediglich dadurch definiert ist, daß von ihm der Einschnappabschnitt ausgeht, und sich an den zweiten Rand ein weiterer kreisringförmiger oder anders ausgebildeter Abschnitt des Plombierrings anschließt. In diesem Fall kann der obere Rand auch als Begrenzungslinie des Basisabschnitts verstanden werden. So ist es. beispielsweise möglich, daß der Plombierring eine axiale Erstreckung aufweisenden kreisringförmigen Abschnitt aufweist, von dessen Innenfläche in einer bestimmten Höhe der bzw. die Einschnappabschnitte ausgehen und sich schräg nach oben erstrecken. Dann wird der Basisabschnitt durch den Teilabschnitt des kreisringförmigen Abschnitts gebildet, der unterhalb der Einschnappabschnitte liegt. Es ist jedoch bevorzugt, daß sich an den zweiten Rand des Basisabschnitts in die dem ersten Rand gegenüberliegende Richtung mit Ausnahme des Einschnappabschnitts (bzw. mehrerer Einschnappabschnitte) keine weiteren Abschnitte des Plombierrings anschließen. In ähnlicher Weise ist es auch möglich, daß sich an den ersten Rand in die dem zweiten Rand des Basisabschnitts gegenüberliegende Richtung ein weiterer Abschnitt des Plombierrings anschließt. Es ist jedoch bevorzugt, wenn dies nicht der Fall ist. Insgesamt ist es bevorzugt, daß der Plombierring aus dem Basisabschnitt und einem Einschnappabschnitt oder mehreren dieser Einschnappabschnitte besteht.

Der innere Rand des Einschnappabschnitts bildet die achsnächsten Teile des Plombierrings, so daß er den lichten Durchmesser des Plombierrings bestimmt. Ferner ist der Einschnappabschnitt so ausgebildet und angeordnet, daß sein innerer Rand auf einem gedachten Kreis oder dem Rand eines gedachten regelmäßigen Polygons verläuft, der bzw. das in einer zu der Achse des Basisabschnitts senkrechten Ebene verläuft und konzentrisch zu dem Basisabschnitt ist.

In dem Plombierring ist mindestens eine Schwächungszone ausgebildet, die so ausgestaltet ist, daß sie in dem Fall irreversibel zerstört wird, daß eine vorbestimmte, in Richtung auf den Basisabschnitt wirkende axiale Kraft auf die inneren Ränder der Einschnappabschnitte ausgeübt wird. Jede dieser Schwächungszonen stellt demnach eine Sollbruchstelle dar.

Der in dieser Weise ausgestaltete Plombierring hat den Vorteil, daß er in einfacher Weise an einer Meßkapsel oder einem Meßkapseladapter montiert werden kann, die bzw. der einen kreiszylindrischen oder kreiskonusförmigen Endabschnitt mit einem maximalen Querschnittsdurchmesser, der zwischen dem Querschnittsdurchmesser des Kreises oder dem minimalen Querschnittsdurchmessers des Polygons, auf dem der innere Rand des Einschnappabschnitts verläuft, und dem minimalen Querschnittsdurchmesser des zweiten Randes des Basisabschnitts liegt, und eine umlaufende, gegenüber dem Endabschnitt zurückspringende Rastkante aufweist. Dazu wird er mit dem zweiten Rand des Basisabschnitts zuerst über die Meßkapsel bzw. den Meßkapseladapter geschoben und hinter der Rastkante verrastet, ohne daß eine bestimmte Ausrichtung des Plombierrings in Bezug auf die Meßkapsel bzw. den Meßkapseladapter erforderlich ist. Bei dieser Prozedur wird der Einschnappabschnitt, der aufgrund seiner ringsegmentförmigen Ausbildung ein federndes Element bildet, durch den Kontakt mit der Meßkapsel bzw. dem Meßkapseladapter weiter von dem Basisabschnitt weggebogen, was in vorteilhafter Weise zu einer Aufweitung des lichten Innendurchmessers des Plombierrings führt. Sobald der Plombierring bei der Montage den unteren Rand des Endabschnitts der Meßkapsel bzw. des Meßkapseladapters und die Rastkante passiert hat, wird der Einschnappabschnitt federnd in Richtung auf seine Ruheposition bewegt und rastet unter der Rastkante ein, so daß eine Demontage des Plombierrings verhindert wird. Die Zentrierung des montierten Plombierrings kann beispielsweise an der Innenfläche eines hohlzylindrischen Teils des Basisabschnitts gegenüber dem Außendurchmesser der Schraubprofilierung oder an der Innenfläche eines hohlkegelstumpfförmigen Teils des Basisabschnitts gegenüber einem Außenrand der Schraubprofilierung erfolgen.

Durch den schräg von dem Basisabschnitt weggerichteten Verlauf des Einschnappabschnitts, wird dieser bei dem Versuch, den montierten Plombierring nach oben von der Meßkapsel bzw. dem Meßkapseladapter abzuziehen von der Rastkante in Richtung auf den Basisabschnitt gedrückt, was zu einer Verringerung des lichten Innendurchmessers des Plombierrings und zu hohen Zugspannungen in dem äußeren Bereich des Plombierrings führt, die bei ausreichender Kraftausübung bleibende Schäden an den Schwächungszonen bzw. an mindestens einer der Schwächungszonen und zum Beispiel einen Bruch des Plombierrings zur Folge haben.

Der Einschnappabschnitt ist so ausgebildet, daß der Plombierring in der oben beschriebenen Weise an einer mit einer umlaufenden Rastkante versehenen Meßkapsel bzw. einem mit einer umlaufenden Rastkante versehenen Meßkapseladapter befestigt werden kann und eine Entfernung des Plombierrings in der oben beschriebenen Weise verhindert wird. In dem Fall, daß der Plombierring nur einen einzigen Einschnappabschnitt aufweist, hat dieser dazu bevorzugt eine Winkelausdehnung von mehr als 180°.

Der Plombierring ist einfach aufgebaut und kostengünstig herzustellen, da er keine komplizierten Rastelemente, wie zum Beispiel hakenförmige Rastabschnitte, erfordert. Da er einfach per Hand über eine Meßkapsel bzw. einen Meßkapseladapter geschoben werden kann, bis er einrastet, ist kein spezielles Montagewerkzeug erforderlich. Die Einrastung ist in vorteilhafter Weise von außen erkennbar, so daß das sichere Einrasten visuell überprüft werden kann. Schließlich ist keine spezielle Ausrichtung des Plombierrings gegenüber einer mit einer umlaufenden Rastkante ausgestatteten Meßkapsel bzw. einem mit einer umlaufenden Rastkante ausgestatteten Meßkapseladapter erforderlich.

In einer besonders bevorzugten Ausführungsform weist der Plombierring mindestens zwei in Umfangsrichtung des Basisabschnitts voneinander beabstandeten ringsegmentförmige Einschnappabschnitte auf. Einer dieser Einschnappabschnitte ist der oben beschriebene Einschnappabschnitt, und jeder dieser Einschnappabschnitte ist wie der oben beschriebene Einschnappabschnitt ausgestaltet. Dementsprechend geht jeder dieser Einschnappabschnitte von dem zweiten Rand des Basisabschnitts aus und verläuft von dem ersten und dem zweiten Rand des Basisabschnitt weg schräg in Richtung auf die Achse des Basisabschnitts. Mit anderen Worten weist jeder Einschnappabschnitt einen radial äußeren Rand, der mit einem entsprechenden Bereich des zweiten Randes des Basisabschnitts zusammenfällt oder an diesem befestigt ist, und einen radial inneren Rand auf, der von dem zweiten Rand das Basisabschnitts beabstandet ist und näher an der Ringachse liegt, d.h. dem zweiten Rand des Basisabschnitts gegenüberliegt bzw. entgegengesetzt ist. Dabei verläuft der äußere Rand bevorzugt in einem konstanten radialen Abstand zu dem inneren Rand, muß es aber nicht. Der Verlauf der Einschnappabschnitte weist demnach eine axiale Komponente, die von dem Basisabschnitt weggerichtet ist, und eine radiale Komponente auf, die nach innen auf die Ringachse gerichtet ist.

Die inneren Ränder der Einschnappabschnitte bilden die achsnächsten Teile des Plombierrings, so daß sie den lichten Durchmesser des Plombierrings bestimmen. Ferner sind die Einschnappabschnitte so ausgebildet und angeordnet, daß ihre inneren Ränder auf dem gedachten Kreis bzw. dem gedachten Polynom verlaufen.

Durch das Vorsehen von mindestens zwei ringsegmentförmigen Einschnappabschnitten, die aufgrund der gegenseitigen Beabstandung in Umfangsrichtung separate federnde Elemente bilden, können die Einschnappabschnitte sich über einen größeren Winkelbereich als ein einziger Einschappabschnitt erstrecken, ohne daß die Elastizität der Einschnappabschnitte zu gering für eine einfache Montage wird.

Demnach hat ein in dieser Weise ausgestalteter Plombierring den Vorteil, daß er in besonders einfacher Weise an einer Meßkapsel oder einem Meßkapseladapter montiert werden kann, die bzw. der einen kreiszylindrischen oder kreiskonusförmigen Endabschnitt mit einem maximalen Querschnittsdurchmesser, der zwischen dem Querschnittsdurchmesser des Kreises oder dem minimalen Querschnittsdurchmessers des Polygons, auf dem die inneren Ränder der Einschnappabschnitte verlaufen, und dem minimalen Querschnittsdurchmesser des zweiten Randes des Basisabschnitts liegt, und eine umlaufende, gegenüber dem Endabschnitt zurückspringende Rastkante aufweist. Dazu wird er, wie bereits zuvor beschrieben wurde, mit dem zweiten Rand des Basisabschnitts zuerst über die Meßkapsel bzw. den Meßkapseladapter geschoben und hinter der Rastkante verrastet, ohne daß eine bestimmte Ausrichtung des Plombierrings in Bezug auf die Meßkapsel bzw. den Meßkapseladapter erforderlich ist. Bei dieser Prozedur werden die Einschnappabschnitte durch den Kontakt mit der Meßkapsel bzw. dem Meßkapseladapter weiter von dem Basisabschnitt weggebogen, was in vorteilhafter Weise zu einer Aufweitung des lichten Innendurchmessers des Plombierrings führt. Sobald der Plombierring bei der Montage den unteren Rand des Endabschnitts der Meßkapsel bzw. des Meßkapseladapters und die Rastkante passiert hat, werden die Einschnappabschnitte federnd in Richtung auf ihre Ruheposition bewegt und rasten unter der Rastkante ein, so daß eine Demontage des Plombierrings verhindert wird.

Durch den schräg von dem Basisabschnitt weggerichteten Verlauf der Einschnappabschnitte, werden diese bei dem Versuch, den montierten Plombierring nach oben von der Meßkapsel bzw. dem Meßkapseladapter abzuziehen von der Rastkante in Richtung auf den Basisabschnitt gedrückt, was zum einen zu einer Verringerung des lichten Innendurchmessers des Plombierrings und zum anderen zu hohen Zugspannungen in dem äußeren Bereich des Plombierrings führt, die bei ausreichender Kraftausübung bleibende Schäden an den Schwächungszonen bzw. an mindestens einer der Schwächungszonen und zum Beispiel einen Bruch des Plombierrings zur Folge haben.

Der Plombierring ist bevorzugt einstückig ausgebildet. Ferner ist es bevorzugt, wenn der Plombierring aus Kunststoff ausgebildet ist. Es ist besonders bevorzugt, wenn der Plombierring einstückig aus einem Kunststoff hergestellt ist.

Der Plombierring ist bevorzugt aus einem elastischen Material ausgebildet. Ferner ist das Material des Plombierrings bevorzugt spröde, um zu gewährleisten, daß der Plombierring bei einem Manipulationsversuch irreversibel beschädigt wird. Dabei sind die elastischen und spröden Materialeigenschaften so aufeinander abzustimmen, daß der letztere Effekt erreicht, aber gleichzeitig die vorteilhafte Aufweitung des lichten Innendurchmessers des Plombierrings beim Aufschieben auf eine Meßkapsel ermöglicht wird, ohne daß der Plombierring bei diesem Aufschieben beschädigt wird.

Es ist auch vorteilhaft, wenn die Einschnappabschnitte in regelmäßigen Abständen voneinander angeordnet sind. Es ist aber auch möglich, daß die Einschnappabschnitte in unregelmäßigen Abschnitten voneinander angeordnet sind. Eine derartige Asymmetrie kann beispielsweise dann vorteilhaft sein, wenn nur eine Schwächungszone vorhanden ist oder wenn eine bestimmte von mehreren Schwächungszonen bevorzugt beschädigt werden soll.

In einer vorteilhaften Ausgestaltung weist der Basisabschnitt einen hohlzylindrischen oder hohlkegel- bzw. hohlkonusförmigen Abschnitt mit kreisförmigem Querschnitt auf. Es ist möglich, daß ein umlaufender Rand bzw. ein abschließender Rand des hohlzylindrischen oder hohlkegelförmigen Abschnitts den zweiten Rand des Basisabschnitts bildet. Alternativ ist es möglich, daß von einem umlaufenden Rand bzw. abschließenden Rand des hohlzylindrischen oder hohlkegelförmigen Abschnitts ein von dem ersten Rand des Basisabschnitts weg schräg in Richtung auf die Achse des Basisabschnitts verlaufender, umlaufender Ringabschnitt ausgeht, dessen von dem hohlzylindrischen oder hohlkegelförmigen Abschnitt abgewandter, innerer Rand den zweiten Rand des Basisabschnitts bildet. Das Vorsehen eines solchen Ringabschnitts hat den Vorteil, daß sich der Basisabschnitt selbst auf vorspringenden Bereichen der Schraubprofilierung abstützen und diese teilweise oder vollständig in axialer Richtung abdecken kann. Auf diese Weise kann auch die Zentrierung des Plombierrings gegenüber der Meßkapsel erfolgen. In dem Fall eines solchen Ringabschnitts ist es ferner vorteilhaft, wenn der Einschnappabschnitt einen radial nach innen gerichteten, fluchtenden Fortsatz des Ringabschnitts darstellt bzw. die Einschnappabschnitte radial nach innen gerichtete, fluchtende Fortsätze des Ringabschnitts darstellen. Dann kann man sich den Aufbau des Plombierrings auch so vorstellen, daß der Ringabschnitt des Basisabschnitts und der Einschnappabschnitt bzw. die Einschnappabschnitte zusammen einen einheitlichen Ringbereich darstellen, der zur Ausbildung eines einzigen Einschnappabschnitts eine einzige ringsegmentförmige, radiale Aussparung aufweist oder zur Ausbildung mehrerer Einschnappabschnitte mehrere radiale Einschnitte oder Aussparungen aufweist, die die Einschnappabschnitte definieren und voneinander trennen. Im Falle von mehreren schmalen Einschnitten ist zu beachten, daß der zweite Rand des Basisabschnitts durch die Verbindungslinien zwischen den tiefsten Punkten der Einschnitte definiert wird.

Der hohlzylindrische oder hohlkegelförmige Abschnitt kann mit dem Basisabschnitt identisch sein oder einen Teil von ihm bilden. Insbesondere ist es möglich, daß sich der hohlzylindrische oder hohlkegelförmige Abschnitt von dem ersten Rand des Basisabschnitts bis zu dessen zweitem Rand oder bis zu dem soeben beschriebenen Ringabschnitt des Basisabschnitts erstreckt. Ein Basisabschnitt mit einem hohlzylindrischen oder hohlkegelförmigen Abschnitt ist besonders einfach herzustellen.

In dem Fall, daß der Basisabschnitt einen hohlzylindrischen oder hohlkegelförmigen Abschnitt aufweist, ist es ferner bevorzugt, wenn sich zwischen dem hohlzylindrischen oder hohlkegelförmigen Abschnitt und dem ersten Rand des Basisabschnitts keine Bereiche befinden, die einen geringeren Querschnittsdurchmesser als der hohlzylindrische oder hohlkegelförmige Abschnitt haben, und wenn der hohlzylindrische oder hohlkegelförmige Abschnitt keine nach innen gerichteten Vorsprünge aufweist. Durch diese Ausgestaltung muß auch der Basisabschnitt nicht in Bezug auf eine Meßkapsel, eines Befestigungselements oder deren Schraubprofilierung ausgerichtet werden. Außerdem kann der Plombierring einen gegenüber der für den Einsatz mit dem Plombierring vorgesehenen Meßkapsel bzw. dem für den Einsatz mit dem Plombierring vorgesehenen Meßkapseladapter nur geringfügig größeren Durchmesser aufweisen, so daß eine weitgehende Kompatibilität gewährleistet werden kann.

In einer weiteren vorteilhaften Ausgestaltung des Plombierrings ist der erste Rand des Basisabschnitts und/oder der zweite Rand des Basisabschnitts kreisförmig und verläuft in einer zu der Achse des Basisabschnitts senkrechten Ebene.

Im Fall mehrerer Einschnappabschnitte ist es bevorzugt, daß alle Einschnappabschnitte identische Abmessungen haben, d.h. identisch ausgebildet sind. Es ist aber auch möglich, daß die Einschnappabschnitte unterschiedliche Abmessungen haben. Eine derartige Asymmetrie kann beispielsweise dann vorteilhaft sein, wenn nur eine Schwächungszone vorhanden ist oder wenn eine bestimmte von mehreren Schwächungszonen bevorzugt beschädigt werden soll.

In eine bevorzugten Ausführungsform beträgt der Winkel zwischen jedem Einschnappabschnitt und einer zu der Achse des Basisabschnitt senkrechten Ebene 10° bis 45° und mehr bevorzugt 15° bis 25°. Der Winkel bestimmt zusammen mit den Abmessungen und den Eigenschaften des Materials des Einschnappabschnitts bzw. der Einschnappabschnitte dessen bzw. deren Federeigenschaften, so daß der Winkel unter Berücksichtigung von Abmessungen und Materialeigenschaften gewählt werden muß.

In einer vorteilhaften Ausgestaltung ist in mindestens einer der Schwächungszonen eine Öffnung in dem Plombierring ausgebildet. In eine solche Öffnung kann ein geeignetes Werkzeug eingeführt werden, mit dem die Schwächungszone zerstört und der Plombierring zur Entfernung zerbrochen werden kann. Beispielsweise kann eine solche Öffnung schlitzförmig sein, so daß in sie die Spitze eines Schlitzschraubendrehers eingeführt werden kann. Eine solche schlitzförmige Öffnung verläuft bevorzugt zumindest teilweise in einem der Einschnappabschnitte und erstreckt sich bevorzugt in radialer Richtung.

Die Schwächungszonen werden bevorzugt jeweils durch einen in axialer Richtung von dem ersten Rand des Basisabschnitts bis zu dem inneren Rand eines Rastabschnitts verlaufenden länglichen Bereich verminderter Dicke gebildet. Dazu weist der Plombierring bevorzugt an seiner Innenfläche oder seiner Außenfläche eine entsprechende längliche Vertiefung bzw. andere Querschnittsverringerung auf. Derartige Schwächungszonen sind besonders einfach auszubilden und erleichtern das vollständige Durchtrennen des Plombierrings zum Zwecke seiner Entfernung von einem Durchflußmesser.

In einer bevorzugten Ausbildung des Plombierrings decken die inneren Ränder der Einschnappabschnitte mindestens 95% des Umfangs des Kreises bzw. Polygons ab, auf dem sie verlaufen. Eine solche Ausgestaltung hat den Vorteil, daß die Einschnappabschnitte an der axialen Abdeckung der Schraubprofilierung mitwirken. In dem Fall mehrerer Einschnappabschnitte kann es jedoch auch von Vorteil sein, wenn die inneren Ränder der Einschnappabschnitte sehr viel weniger des Umfangs des Kreises bzw. Polygons abdecken, auf dem sie verlaufen, beispielsweise weniger als 10% und bevorzugt weniger als 5%. In diesem Fall müssen die Einschnappabschnitte in der Weise entlang des Umfangs verteilt voneinander beabstandet angeordnet sein, daß die oben beschriebene Befestigung an einer umlaufenden Rastkante möglich ist. Bevorzugt sind die mehreren Rastabschnitte dazu in regelmäßigen Abschnitten um den Umfang verteilt angeordnet, es sind aber auch unregelmäßige Beabstandungen möglich. Haben die einzelnen Einschnappabschnitte nur eine sehr geringe Ausdehnung ist es zur zuverlässigen Erfüllung der Funktion des Plombierrings bevorzugt, wenn mindestens drei Einschnappabschnitte vorhanden sind.

Es ist bevorzugt, wenn der zweite Rand des Basisabschnitts die achsnächsten Bereiche des Basisabschnitts umfaßt oder, im Fall eines kreisförmigen zweiten Randes, die achsnächsten Bereiche des Basisabschnitts darstellt.

Der Plombierring kann in vorteilhafter Weise als Teil einer Vorrichtung vorgesehen sein, die eine Komponente eines, insbesondere volumetrischen, Durchflußmessers darstellt und neben dem Plombierring eine Meßkapsel aufweist. Die Meßkapsel weist an einem ersten Ende einen Befestigungsabschnitt zur Befestigung der Meßkapsel an bzw. in dem Anschlußgehäuse auf. Der Befestigungsabschnitt kann beispielsweise ein Gewinde aufweisen, mit dem die Meßkapsel in das mit einem passenden Gewinde versehene Anschlußgehäuse oder einen mit einem passenden Gewinde versehenen Adapter eingeschraubt werden kann, der wiederum, beispielsweise mit Hilfe eines geeigneten Gewindes, an bzw. in dem Anschlußgehäuse befestigt werden kann. Häufig ist es jedoch so, daß die Meßkapsel selbst kein Gewinde aufweist, sondern daß eine separate, mit einem Gewinde versehene Komponente vorgesehen ist, mit der die Meßkapsel an einem in dem Anschlußgehäuse ausgebildeten Gewinde befestigt werden kann. Eine solche separate Komponente kann z.B. in Form eines Befestigungsrings ausgebildet sein, zwischen dem und einem Bereich des Anschlußgehäuses ein geeigneter Abschnitt der Meßkapsel festgeklemmt werden kann. Häufig sind derartige separate Komponenten zur Kostenreduktion der Meßkapsel vorgesehen, da an der Meßkapsel dann kein eigenes Gewinde ausgebildet sein muß und sie auf diese Weise materialsparender ausgelegt werden kann. Die Meßkapsel oder eine separate, mit einem Gewinde versehene Komponente, etwa in Form eines Befestigungsrings, zur Befestigung der Meßkapsel an bzw. in einem Anschlußgehäuse, weist eine Schraubprofilierung auf. Ferner weist die Meßkapsel einen von dem dem Befestigungsabschnitt gegenüberliegenden Ende ausgehenden Endabschnitt mit bevorzugt kreisförmigem Querschnitt auf, der an einem zurückspringenden, umlaufenden, bevorzugt kreisförmigen Rand endet. Dabei ist der maximale Querschnittsdurchmesser des Endabschnitts der Meßkapsel größer als der Durchmesser des Kreises bzw. der minimale Durchmesser des Polygons gewählt, auf dem der innere Rand des Einschnappabschnitts verläuft bzw. die inneren Ränder der Einschnappabschnitte des Plombierrings verlaufen, aber kleiner als der Durchmesser bzw. der minimale Durchmesser des zweiten Randes des Basisabschnitts. Durch diese Dimensionierung kann der Plombierring mit seinem ersten Rand zuerst in Richtung auf den zurückspringenden, umlaufenden Rand über den Endabschnitt der Meßkapsel geschoben werden, wobei sich der Einschnappabschnitt bzw. die Einschnappabschnitte so verbiegt bzw. verbiegen, daß sich der Winkel zwischen dem Einschnappabschnitt bzw. den Einschnappabschnitten und einer zu der Achse des Basisabschnitt senkrechten Ebene vergrößert. Bei Erreichen des zurückspringenden, umlaufenden Randes schnappt der Einschnappabschnitt bzw. schnappen die Einschnappabschnitt unter Verkleinerung dieses Winkels wieder in Richtung auf seine bzw. ihre entspannte Position zurück, so daß sich der lichte Innendurchmesser des Plombierrings verkleinert und der Einschnappabschnitt bzw. die Einschnappabschnitte hinter dem zurückspringenden, umlaufenden Rand einrastet bzw. einrasten. Der Plombierring und die Meßkapsel sind in ihren Abmessungen so aufeinander abgestimmt, daß in dieser eingerasteten Position der Basisabschnitt des Plombierrings die Schraubprofilierung abdeckt.

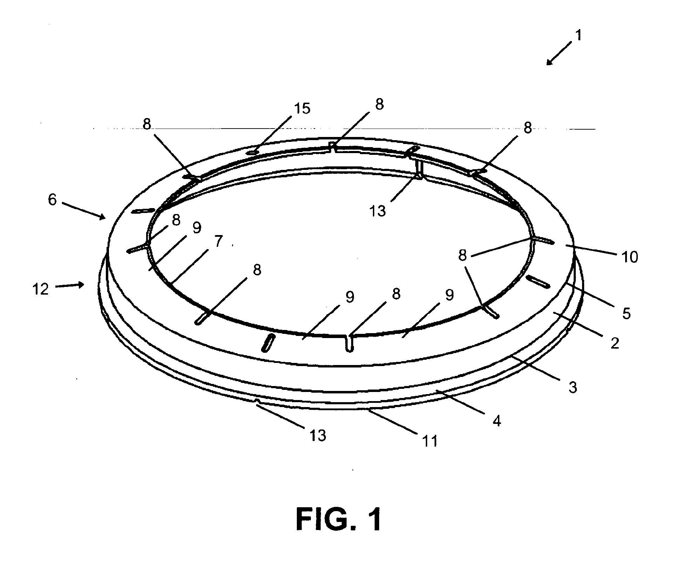

Die Erfindung wird im folgenden anhand eines Ausführungsbeispiels unter Bezugnahme auf die Zeichnungen näher erläutert.
- Figur 1: zeigt eine perspektivische Ansicht einer Ausführungs- form eines erfindungsgemäßen Plombierrings.
- Figur 2: zeigt eine Draufsicht von oben auf den in Figur 1 ge- zeigten Plombierring.
- Figur 3: zeigt eine Schnittansicht des in Figur 1 gezeigten Plombierrings.
- Figur 4: zeigt eine Draufsicht von oben auf eine alternative Ausführungsform eines erfindungsgemäßen Plombier- rings.
- Figur 5: zeigt den in den Figuren 1 bis 4 dargestellten Plom- bierring während der Montage an einem Wasserzähler.
- Figur 6: zeigt den in den Figuren 1 bis 4 dargestellten Plom- bierring im fertig an einem Wasserzähler montierten Zustand.
- Figur 7: zeigt den in den Figuren 1 bis 4 dargestellten Plom- bierring im fertig an einem alternativen Wasserzähler montierten Zustand.
Der in den Figuren 1 bis 3 gezeigte Plombierring 1 weist einen mittleren hohlzylindrischen Abschnitt 2 mit kreisförmigem Querschnitt auf, von dessen unterem Rand 3 ein schräg nach unten und außen verlaufender unterer ringförmiger Wandabschnitt 4 ausgeht, der gegenüber dem mittleren Abschnitt 2 zu einer Aufweitung des Innendurchmessers führt. Von dem oberen Rand 5 des mittleren hohlzylindrischen Abschnitts 2 geht ein radial nach innen und axial von dem mittleren Abschnitt 2 weg verlaufender oberer ringförmiger Wandabschnitt 6 aus, der gegenüber dem mittleren Abschnitt 2 zu einer Verringerung des Innendurchmessers führt. Der obere ringförmige Wandabschnitt 6 hat demnach in Bezug auf die Ringachse 25 bzw. eine zu der Ringachse 25 senkrechte Ebene einen schrägen Verlauf. Insgesamt ist der Plombierring 1 auf diese Weise kreisringförmig ausgestaltet.

In dem oberen ringförmigen Wandabschnitt 6 sind acht von dem inneren, kreisförmigen Rand 7 des oberen ringförmigen Wandabschnitt 6 ausgehende schlitzförmige Einschnitte 8 vorgesehen, die entlang des Umfangs des oberen ringförmigen Wandabschnitt 6 voneinander regelmäßig beabstandet sind. Die Einschnitte 8 verlaufen radial nach außen und erstrecken sich über ungefähr 50% der Breite des oberen ringförmigen Wandabschnitts 6.

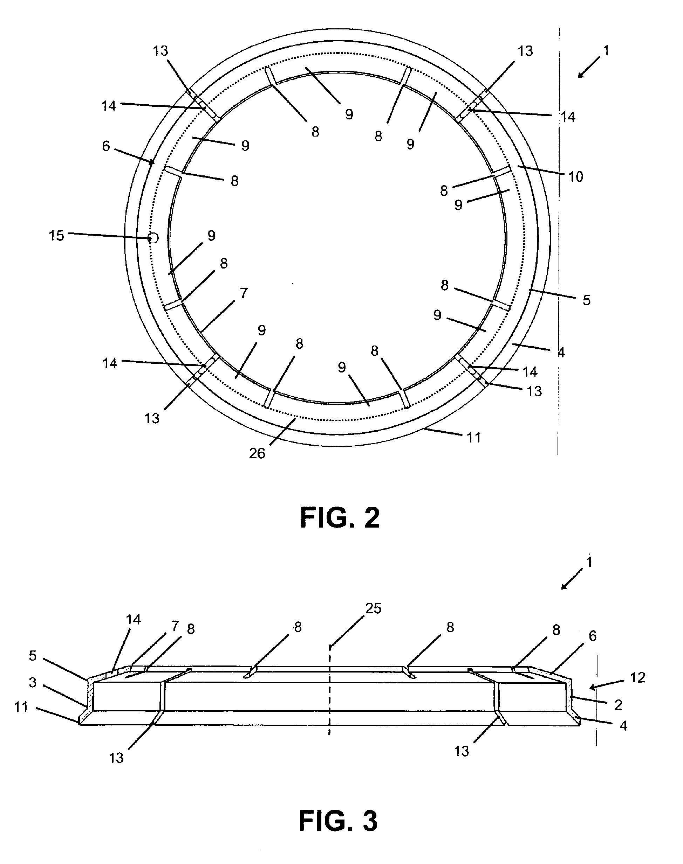

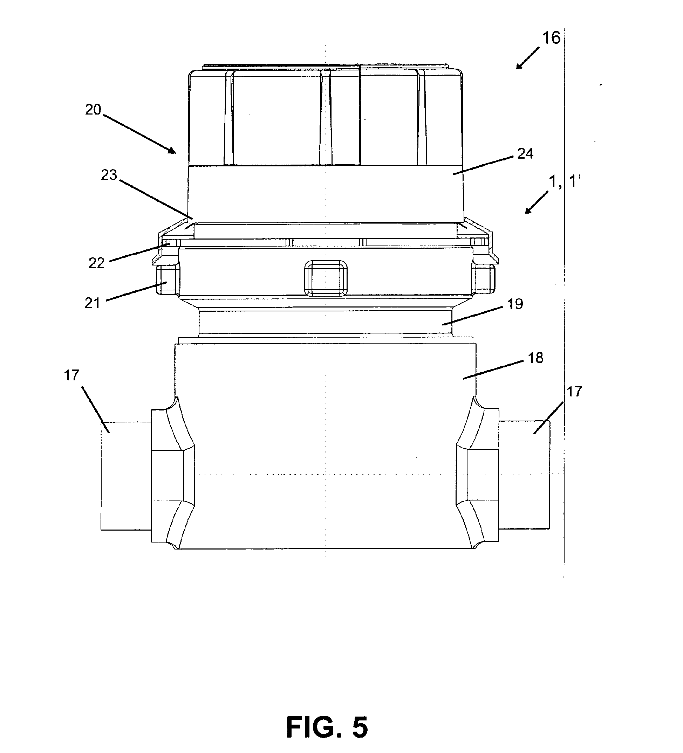

Aus Figur 2 ist ersichtlich, daß zwischen jedem Paar benachbarter Einschnitte 8 ein Abschnitt 9 erhöhter Elastizität ausgebildet ist, der von der die tiefsten Punkte der Einschnitte 8 verbindenden (gedachten) Kreislinie ausgeht und sich zu dem inneren Rand 7 des oberen ringförmigen Wandabschnitts 6 erstreckt. Die die tiefsten Punkte der Einschnitte 8 verbindende (gedachte) Kreislinie stellt den äußeren Rand 26 (siehe gestrichelte Linie in Figur 2) eines durchgehenden ringförmigen Teilabschnitts 10 des oberen ringförmigen Wandabschnitts 6 dar. Von diesem äußeren Rand 26 verlaufen die Abschnitte 9 nach innen. Der von dem unteren umlaufenden Rand 11 des Plombierrings bis zu dem äußeren Rand des durchgehenden ringförmigen Teilabschnitts 10 verlaufende Teil des Plombierrings 1 stellt den Basisabschnitt 12 des Plombierrings 1 dar. Die Abschnitte 9 sind, wie in Bezug auf die Figuren 5 bis 7 erläutert wird, Einschnapp- oder Rastabschnitte und können auch als Federelemente bezeichnet werden. Jeder Abschnitt 9 ist ringsegmentförmig und in dieser Ausführungsform aufgrund der kreissegmentförmigen und konzentrischen Ränder 26 und 7 kreisringsegmentförmig.

Der Plombierring 1 weist ferner vier längliche Vertiefungen 13 auf, die in der Innenfläche des Plombierrings 1 ausgebildet sind. Jede der Vertiefungen 13 verläuft von dem unteren Rand 11 bis zu dem inneren Rand 7. Diese Vertiefungen 13 bilden Schwächungszonen bzw. Zonen verringerter Wandstärke des Plombierrings 1, entlang derer der Plombierring 1 bei einer geeigneten Krafteinwirkung bevorzugt aufbricht. In jeder Schwächungszone 13 ist ferner eine schlitzförmige Bohrung 14 vorgesehen, die im Bereich des oberen ringförmigen Wandabschnitts 6 ausgebildet ist und sich teilweise in die Einschnappabschnitte 9 erstreckt. In diese schlitzförmigen Bohrungen 14, die in anderen Ausführungsformen auch andere Formen aufweisen können, kann ein geeignetes Werkzeug, wie zum Beispiel ein Schlitzschraubendreher, eingeführt und dazu verwendet werden, um die jeweilige Schwächungszone 13 zu beschädigen und den Plombierring 1 auf diese Weise aufzubrechen.

In dem oberen ringförmigen Wandabschnitt 6 ist ferner eine kreisförmige Bohrung 15 vorgesehen, in der ein Plombierdraht zur zusätzlichen Sicherung des Plombierrings 1 befestigt werden kann.

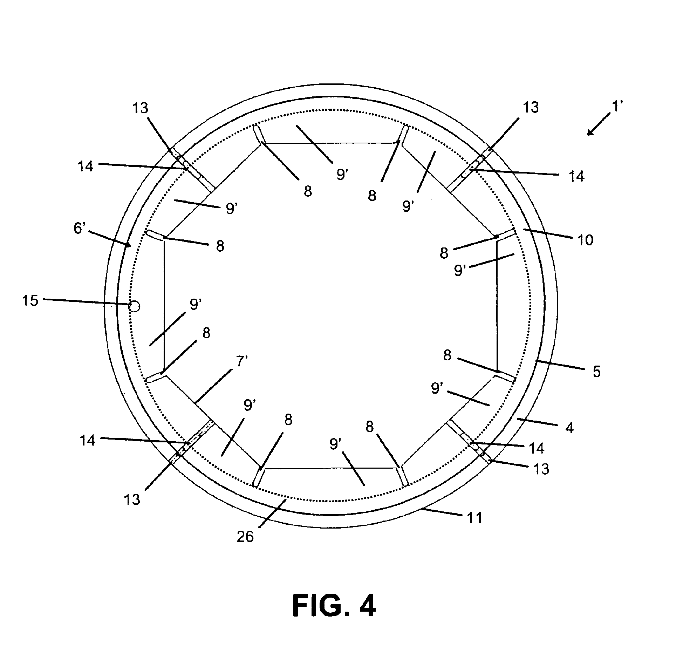

In Figur 4 ist eine alternative Ausführungsform eines Plombierrings 1' gezeigt, der sich nur dadurch von dem in den Figuren 1 bis 3 gezeigten Plombierring 1 unterscheidet, daß der innere Rand 7' des oberen ringförmigen Wandabschnitts 6' nicht kreisförmig ist sondern auf einem regelmäßigen Achteck verläuft. Daher ist jeder Abschnitt 9' zwar noch ringsegmentförmig, jedoch aufgrund des nicht kreissegmentförmigen inneren Randes 7 nicht kreisringförmig.

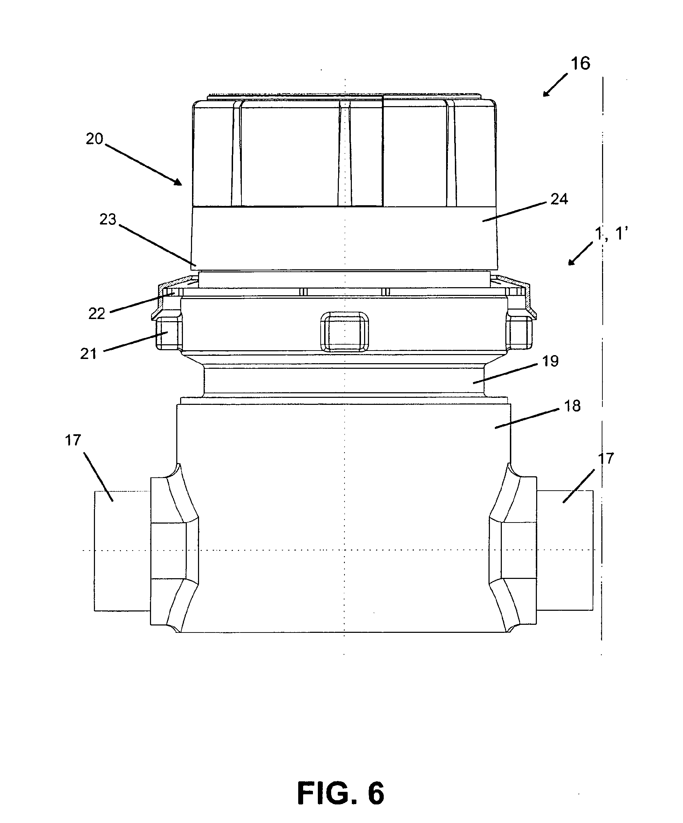

In den Figuren 5 und 6 ist die Montage des Plombierrings 1 an einem Wasserzähler 16 gezeigt.

Der Wasserzähler 16 weist grob ein in einer Rohrleitung 17 installiertes Anschlußgehäuse 18 auf, in das ein Adapter 19 eingeschraubt ist, in den wiederum die das Zählwerk enthaltende Meßkapsel 20 eingeschraubt oder in dem sie auf sonstige Weise befestigt ist. In Abhängigkeit von der verwendeten Meßkapsel 20 kann der Adapter 19 auch weggelassen werden. Die Meßkapsel 20 und der Adapter 19 können auch zusammen als Meßkapsel angesehen werden, wobei die Meßkapsel 20 dann den Hauptteil einer derart definierten Meßkapsel darstellt. Der Adapter 19 ist z.B. erforderlich, wenn aufgrund nicht zusammenpassender Gewinde, Geometrien bzw. Abmessungen oder sonstiger Anschlußmaße, aufgrund einer erforderlichen Verlängerung oder Anpassung an bestimmte Strömungsverhältnisse und/oder aufgrund des Umstands, daß die Meßkapsel 20 selbst kein Gewinde hat die Meßkapsel 20 nicht unmittelbar in das Anschlußgehäuse 18 eingeschraubt werden kann. Der Adapter 19 weist eine Schraubprofilierung 21 auf, die in Form entlang des Adapterumfangs angeordneter, voneinander beabstandeter Nocken vorgesehen ist. In ähnlicher Weise weist die Meßkapsel 20 eine Schraubprofilierung 22 auf. Die Schraubprofilierungen 21 und 22 dienen dazu, den Adapter 19 bzw. die Meßkapsel 20 mit Hilfe eines geeigneten, an der jeweiligen Schraubprofilierung 21 bzw. 22 angreifenden Werkzeugs aus dem Anschlußgehäuse 18 bzw. dem Adapter 19 herauszuschrauben und in diese einzuschrauben. Oberhalb der Schraubprofilierung 22 der Meßkapsel 20 ist an dieser ein zurückspringender, umlaufender Rand 23 ausgebildet, der das untere Ende eines annähernd zylindrischen bzw. leicht konischen, sich in Richtung auf das Anschlußgehäuse verbreiternden oberen Endabschnitts 24 der Meßkapsel 20 definiert.

Zur Montage des Plombierrings 1, 1' wird dieser mit seinem unteren Rand 11 voran über den Endabschnitt 24 der Meßkapsel 20 geschoben. Der Plombierring 1, 1' ist im Verhältnis zu der Meßkapsel 20 so dimensioniert, daß der maximale Querschnittsdurchmesser des Endabschnitts 24 der Meßkapsel 20 größer als der Durchmesser des durch den kreisförmigen bzw. achteckigen inneren Rand 7 bzw. 7' des oberen ringförmigen Wandabschnitts 6 bzw. 6' des Plombierrings 1 bzw. 1' definierten Kreises bzw. Achtecks aber kleiner als der Durchmesser des durch den äußeren Rand des durchgehenden ringförmigen Teilabschnitts 10 des Plombierrings 1 definierten Kreises ist. Daher werden die Einschnappabschnitte 9, 9', wie in Figur 5 gezeigt, während des Aufschiebevorgangs nach oben gebogen, so daß sich der durch den kreisförmigen bzw. achteckige inneren Rand 7 bzw. 7' des oberen ringförmigen Wandabschnitts 6 bzw. 6' des Plombierrings 1 bzw. 1' definierte lichte Innendurchmesser des Plombierrings 1 bzw. 1' gegenüber seiner in den Figuren 1 bis 3 bzw. in Figur 4 gezeigten entspannten Form erhöht.

Sobald der innere Rand 7, 7' des oberen ringförmigen Wandabschnitts 6, 6' des Plombierrings 1, 1' den zurückspringenden, umlaufenden Rand 23 der Meßkapsel 20 passiert hat, schnappen die Einschnappabschnitte 9, 9', wie in Figur 6 gezeigt ist, in ihre entspannte Form zurück, so daß sich der durch den kreisförmigen bzw. achteckigen inneren Rand 7 bzw. 7' des oberen ringförmigen Wandabschnitts 6 bzw. 6' des Plombierrings 1 bzw. 1' definierte lichte Innendurchmesser des Plombierrings 1 bzw. 1' wieder verringert. Da dieser entspannte lichte Innendurchmesser kleiner als der Durchmesser des zurückspringenden, umlaufenden Randes 23 der Meßkapsel 20 ist, kann der Plombierring 1, 1' nicht mehr nach oben von der Meßkapsel 20 abgezogen werden. Sobald man versucht, dies zu tun, stößt der Plombierring 1 bzw. 1' mit dem kreisförmigen bzw. achteckigen inneren Rand 7 bzw. 7' des oberen ringförmigen Wandabschnitts 6 bzw. 6' von unten gegen den Rand 23 der Meßkapsel 20, wodurch eine in Figur 6 nach unten gerichtete Kraft auf die Einschnappabschnitte 9 bzw. 9' ausgeübt wird. Durch diese Kraft werden die Einschnappabschnitte 9, 9' nach unten gebogen, wodurch sich der lichte Durchmesser des Plombierrings 1, 1' gegenüber seiner entspannten Form verringert und das Entfernen des Plombierrings 1, 1' weiter erschwert wird.

In dem in Figur 6 gezeigten fertig montierten Zustand stützt sich der Plombierring 1, 1' mit der Unterseite des ringförmigen Teilabschnitts 10 oben auf der Schraubprofilierung 22 der Meßkapsel 20 ab und verhindert zusammen mit den Einschnappabschnitten 9, 9' ein axial von oben erfolgendes Angreifen an der Schraubprofilierung 22 und bewirkt eine Zentrierung des Plombierrings 1, 1' gegenüber der Meßkapsel 20. Der mittlere hohlzylindrische Abschnitt 2 deckt die Schraubprofilierung 22 seitlich ab. Schließlich deckt der untere ringförmige Wandabschnitt 4 die Schraubprofilierung 21 von oben ab.

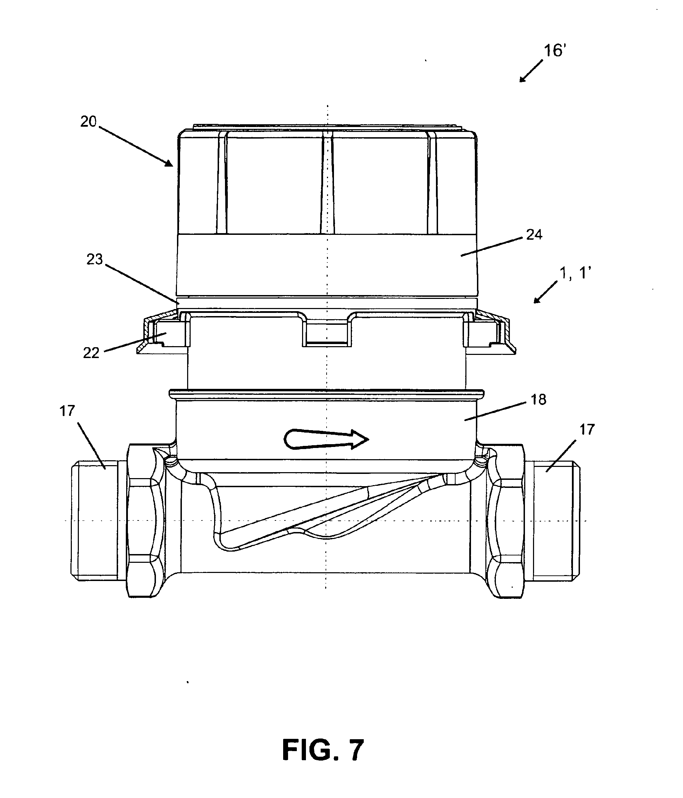

Da der innere Rand 7 des oberen ringförmigen Wandabschnitts 6 des in den Figuren 1 bis 3 gezeigten Plombierrings 1 bis auf die Einschnitte 8 kreisförmig ist bzw. der innere Rand 7' des oberen ringförmigen Wandabschnitts 6' des in Figur 4 gezeigten Plombierrings 1' bis auf die Einschnitte 8 achteckig ist und auf der Innenseite des kreisringförmigen Basisabschnitts 12 keine radialen Vorsprünge vorhanden sind, kann die Zentrierung des Plombierrings 1 bzw. 1' wahlweise an den Innenkanten 7 bzw. 7' der Einschnappabschnitte 9 bzw. 9' gegenüber der Meßkapsel 20 (siehe auch Figur 7, in der die Innenkanten 7, 7' an einem unterhalb des Randes 23 vorgesehenen Abschnitt der Meßkapsel 20 anliegen) oder an der Innenfläche des mittleren hohlzylindrischen Abschnitts 2 gegenüber dem Außendurchmesser der Schraubprofilierung 22 erfolgen (siehe Figur 6, in der die Innenfläche des mittleren hohlzylindrischen Abschnitts 2 des Plombierrings 1, 1' an den Außenflächen der Schraubprofilierung 22 anliegt). Der Plombierring 1, 1' muß nicht in Bezug auf den Zähler 16 bzw. die Meßkapsel 20 ausgerichtet werden und ist gegenüber der eingeschraubten Meßkapsel 20 bzw. dem eingeschraubten Adapter 19 frei drehbar. Dies vereinfacht die Montage weiter und verhindert, daß die Meßkapsel 20 bzw. der Adapter 19 durch eine gemeinsame Drehbewegung mit dem Plombierring 1, 1' demontiert werden kann.

Lediglich die Unterseite der Schraubprofilierungen 21 und 22 ist nicht durch den Plombierring 1, 1' abgedeckt. Bei Bedarf, wie etwa bei einer Montage oberhalb der Wandoberfläche, können Meßkapsel 20 und Adapter 19 aus diesem Grunde durch die zusätzliche Verbindung des Plombierringes 1, 1' mit dem Anschlußgehäuse 18 über einen Plombierdraht (nicht gezeigt) gesichert werden. Ein derartiger Plombierdraht verhindert dann ein Herausheben der Meßkapsel 20 aus dem Anschlußgehäuse 18, sofern der Plombierring 1, 1' nicht bereits durch die Manipulationsversuche beschädigt worden ist.

In Figur 7 ist ein weiterer Wasserzähler 16' gezeigt, dessen Meßkapsel 20 ohne einen Adapter 19 unmittelbar in das Anschlußgehäuse 18 eingeschraubt ist.

## Patentansprüche

1. Plombierring zur Sicherung einer in einem Anschlußgehäuse (18) befestigten Meßkapsel (20) eines Durchflußmessers (16) gegen ein unbefugtes Entfernen mit:
- einem kreisringförmigen Basisabschnitt (12) zur Abdeckung einer Schraubprofilierung (22) einer Meßkapsel (20) oder einer Schraubprofilierung eines Befestigungsrings zur Befestigung einer Meßkapsel, wobei sich der Basisabschnitt (12) von einem ersten Rand (11) zu einem zweiten Rand (26) erstreckt, der entlang der Achse (25) des Basisabschnitts (12) von dem ersten Rand (11) beabstandet ist,
**dadurch gekennzeichnet, dass** der Plombierring ferner
- einen ringsegmentförmigen Einschnappabschnitt (9, 9') aufweist,
- der von dem zweiten Rand (26) des Basisabschnitts (12) ausgeht und von dem ersten (11) und dem zweiten Rand (26) des Basisabschnitt (12) weg schräg in Richtung auf die Achse (25) des Basisabschnitts (12) verläuft und
- dessen dem zweiten Rand (26) des Basisabschnitts (12) gegenüberliegender, innerer Rand (7, 7') die achsnächsten Teile des Plombierrings (1, 1') darstellt und auf einem Kreis oder dem Rand eines regelmäßigen Polygons verläuft, der bzw. das senkrecht zu der Achse (25) des Basisabschnitts (12) verläuft und konzentrisch zu dem Basisabschnitt (12) ist, und
- mindestens eine in dem Plombierring (1, 1') ausgebildete Schwächungszone (13) aufweist, die in dem Fall irreversibel zerstört wird, daß eine vorbestimmte, in Richtung auf den Basisabschnitt (12) wirkende axiale Kraft auf die inneren Ränder (7, 7') der Einschnappabschnitte (9, 9') ausgeübt wird.

2. Plombierring nach Anspruch 1, der mindestens zwei in Umfangsrichtung des Basisabschnitts (12) voneinander beabstandete ringsegmentförmige Einschnappabschnitte (9, 9') aufweist,
- die jeweils von dem zweiten Rand (26) des Basisabschnitts (12) ausgehen und von dem ersten (11) und dem zweiten Rand (26) des Basisabschnitt (12) weg schräg in Richtung auf die Achse (25) des Basisabschnitts (12) verlaufen und
- deren dem zweiten Rand (26) des Basisabschnitts (12) gegenüberliegenden, inneren Ränder (7, 7') die achsnächsten Teile des Plombierrings (1, 1') darstellen und auf dem Kreis oder dem Rand des regelmäßigen Polygons verlaufen.

3. Plombierring nach Anspruch 1 oder Anspruch 2, der einstükkig ausgebildet ist.

4. Plombierring nach einem der vorhergehenden Ansprüche, der aus Kunststoff ausgebildet ist.

5. Plombierring nach einem der vorhergehenden Ansprüche, der aus einem elastischen Material ausgebildet ist.

6. Plombierring nach Anspruch 5, der aus einem spröden Material ausgebildet ist.

7. Plombierring nach einem der vorhergehenden Ansprüche, bei dem der Basisabschnitt (12) einen hohlzylindrischen oder hohlkegelförmigen Abschnitt (2) mit kreisförmigem Querschnitt aufweist.

8. Plombierring nach Anspruch 7, bei dem ein umlaufender Rand des hohlzylindrischen oder hohlkegelförmigen Abschnitts (2) den zweiten Rand des Basisabschnitts bildet.

9. Plombierring nach Anspruch 7, bei dem von einem umlaufenden Rand (5) des hohlzylindrischen oder hohlkegelförmigen Abschnitts (2) ein von dem ersten Rand (11) des Basisabschnitts (12) weg schräg in Richtung auf die Achse (25) des Basisabschnitts (12) verlaufender, umlaufender Ringabschnitt (10) ausgeht, dessen von dem hohlzylindrischen oder hohlkegelförmigen Abschnitt (2) abgewandter, innerer Rand (26) den zweiten Rand (26) des Basisabschnitts (12) bildet.

10. Plombierring nach Anspruch 9, bei dem jeder Einschnappabschnitte (9, 9') einen radial nach innen gerichteten, fluchtenden Fortsatz des Ringabschnitts (10) darstellt.

11. Plombierring nach einem der Ansprüche 7 bis 10, bei dem sich zwischen dem hohlzylindrischen oder hohlkegelförmigen Abschnitt (2) und dem ersten Rand (11) des Basisabschnitts (12) keine Bereiche befinden, die einen geringeren Querschnittsdurchmesser als der hohlzylindrische oder hohlkegelförmige Abschnitt (2) haben, und bei dem der hohlzylindrische oder hohlkegelförmige Abschnitt (2) keine nach innen gerichteten Vorsprünge aufweist.

12. Plombierring nach einem der vorhergehenden Ansprüche, bei dem der erste (11) und/oder der zweite Rand (26) kreisförmig ist und in einer zu der Achse (25) des Basisabschnitts (12) senkrechten Ebene verläuft.

13. Plombierring nach einem der Ansprüche 2 bis 12, bei dem alle Einschnappabschnitte (9, 9') identische Abmessungen haben.

14. Plombierring nach einem der vorhergehenden Ansprüche, bei dem der Winkel zwischen jedem Einschnappabschnitt (9, 9') und einer zu der Achse (25) des Basisabschnitt (12) senkrechten Ebene zwischen 10° und 45° beträgt.

15. Plombierring nach einem der vorhergehenden Ansprüche, bei dem in mindestens einer der Schwächungszonen (13) eine Öffnung (14) in dem Plombierring (1, 1') ausgebildet ist.

16. Plombierring nach einem der vorhergehenden Ansprüche, bei dem jede der Schwächungszonen (13) ein in axialer Richtung von dem ersten Rand (11) des Basisabschnitts bis zu dem inneren Rand (7, 7') eines Rastabschnitts (9, 9') verlaufender länglicher Bereich verminderter Dicke des Plombierrings (1, 1') ist.

17. Plombierring nach einem der vorhergehenden Ansprüche, bei dem die inneren Ränder (7, 7') der Einschnappabschnitte (9, 9') mindestens 95% des Umfangs des Kreises bzw. des Polygons abdecken, auf dem sie verlaufen.

18. Plombierring nach einem der vorhergehenden Ansprüche, bei dem der zweite Rand (26) des Basisabschnitts (12) die achsnächsten Bereiche des Basisabschnitts (12) umfaßt.

19. Kombination aus einem Plombierring (1, 1') nach einem der Ansprüche 1 bis 18 und einer Meßkapsel (20), die an einem Ende einen Befestigungsabschnitt zur Befestigung in einem Anschlußgehäuse (18) eines Durchflußmessers (16, 16') hat, wobei an der Meßkapsel (20) oder an einem Befestigungselement zur Befestigung der Meßkapsel (20) in dem Anschlußgehäuse (18) eine Schraubprofilierung (22) ausgebildet ist und wobei die Meßkapsel (20) einen von dem dem Befestigungsabschnitt gegenüberliegenden Ende ausgehenden Endabschnitt (24) aufweist, der an einem zurückspringenden, umlaufenden Rand (23) endet, und wobei der maximale Querschnittsdurchmesser des Endabschnitts (24) der Meßkapsel (20) größer als der Durchmesser des Kreises oder Polygons ist, auf dem der innere Rand bzw. die inneren Ränder (7, 7') des Einschnappabschnitts bzw. der Einschnappabschnitte (9, 9') des Plombierrings (1, 1') verlaufen, so daß der Plombierring (1, 1') mit seinem ersten Rand (11) voran in Richtung auf den zurückspringenden, umlaufenden Rand (23) über die Meßkapsel (20) geschoben werden kann, während sich der Einschnappabschnitt bzw. die Einschnappabschnitte (9, 9') so verbiegt bzw. verbiegen, daß sich der Winkel zwischen dem Einschnappabschnitt bzw. den Einschnappabschnitten (9, 9') und einer zu der Achse (25) des Basisabschnitts (12) senkrechten Ebene vergrößert, und der Einschnappabschnitt bzw. die Einschnappabschnitte (9, 9') bei Erreichen des zurückspringenden, umlaufenden Randes (23) diesen Winkel wieder verkleinert bzw. verkleinern und hinter dem zurückspringenden, umlaufenden Rand (23) einrastet bzw. einrasten, wobei in dieser eingerasteten Position der Basisabschnitt (12) des Plombierrings (1, 1') die Schraubprofilierung (22) abdeckt.

## Claims

1. Sealing ring for securing a measuring capsule (20) of a flow meter (16), which measuring capsule is mounted in a connection housing (18), against unauthorized removal, comprising:
- a circular ring-shaped base section (12) for covering a screwing profile (22) of a measuring capsule (20) or a screwing profile of a retaining ring for securing a measuring capsule, wherein the base section (12) extends from a first edge (11) to a second edge (26) which is spaced from the first edge (11) along the axis (25) of the base section (12),
**characterized in that** the sealing ring further comprises
- a snap-in section (9, 9') having the shape of a ring segment,
- which snap-in section extends from the second edge (26) of the base section (12) and slopingly extends away from the first edge (11) and the second edge (26) of the base section (12) towards the axis (25) of the base section (12), and
- the inner edge (7, 7') of which snap-in section, being disposed opposite the second edge (26) of the base section (12), constitutes the portions of the sealing ring (1, 1') closest to the axis and extends on a circle or the border of a regular polygon extending perpendicularly to the axis (25) of the base section (12) and being concentric with respect to the base section (12), and
- at least one weakened zone formed in the sealing ring (1, 1'), which weakened zone is irreversibly destroyed in case a predetermined axial force acting in the direction of the base section (12) is applied to the inner edges (7, 7') of the snap-in sections (9, 9').

2. Sealing ring according to claim 1, comprising at least two snap-in sections (9, 9') having the shape of a ring segment and being spaced from each other in the circumferential direction of the base section (12),
- each extending from the second edge (26) of the base section (12) and slopingly extending away from the first edge (11) and the second edge (26) of the base section (12) towards the axis (25) of the base section (12), and
- the inner edges (7, 7') of which snap-in sections, being disposed opposite the second edge (26) of the base section (12), constitute the portions of the sealing ring (1, 1') closest to the axis and extend on the circle or the border of the regular polygon.

3. Sealing ring according to claim 1 or claim 2 which is integrally formed in one piece.

4. Sealing ring according to any of the preceding claims which is made of plastic material.

5. Sealing ring according to any of the preceding claims which is made of an elastic material.

6. Sealing ring according to claim 5 which is made of a brittle material.

7. Sealing ring according to any of the preceding claims in which the base section (12) comprises a section (2) having the shape of a hollow cylinder or a hollow cone having a circular cross-section.

8. Sealing ring according to claim 7 in which a circumferential edge of the section (2) having the shape of a hollow cylinder or a hollow cone forms the second edge of the base section.

9. Sealing ring according to claim 7 in which a circumferential ring section (10) slopingly extending away from the first edge (11) of the base section (12) towards the axis (25) of the base section (12) extends from a circumferential edge (5) of the section (2) having the shape of a hollow cylinder or a hollow cone, the inner edge (26) of which ring section (10) facing away from the section (2) having the shape of a hollow cylinder or a hollow cone forms the second edge (26) of the base section (12).

10. Sealing ring according to claim 9, wherein each snap-in section (9, 9') constitutes a radially inwardly facing, aligned extension of the ring section (10).

11. Sealing ring according to any of claims 7 to 10, wherein between the section (2) having the shape of a hollow cylinder or a hollow cone and the first edge (11) of the base section (12) there are no regions which have a smaller cross-sectional diameter than the section (2) having the shape of a hollow cylinder or a hollow cone, and wherein the section (2) having the shape of a hollow cylinder or a hollow cone does not comprise inwardly facing protrusions.

12. Sealing ring according to any of the preceding claims, wherein the first edge (11) and/or the second edge (26) is circular and extends in a plane perpendicular to the axis (25) of the base section (12).

13. Sealing ring according to any of claims 2 to 12, wherein all snap-in sections (9, 9') have identical dimensions.

14. Sealing ring according to any of the preceding claims, wherein the angle between each snap-in section (9, 9') and a plane perpendicular to the axis (25) of the base section (12) is between 10° and 45°.

15. Sealing ring according to any of the preceding claims, wherein in at least one of the weakened zones (13) an opening (14) is formed in the sealing ring (1, 1').

16. Sealing ring according to any of the preceding claims, wherein each of the weakened zones (13) is an elongate region of decreased thickness of the sealing (1, 1') extending in the axial direction from the first edge (11) of the base section to the inner edge (7, 7') of a snap-in section (9, 9').

17. Sealing ring according to any of the preceding claims, wherein the inner edges (7, 7') of the snap-in sections (9, 9') cover at least 95 % of the circumference of the circle and the polygon, respectively, on which they extend.

18. Sealing ring according to any of the preceding claims, wherein the second edge (26) of the base section (12) comprises the portions of the base section (12) closest to the axis.

19. Combination of a sealing ring (1, 1') according to any of claims 1 to 18 and a measuring capsule (20) having at one end an attachment section for securing in a connection housing (18) of a flow meter (16, 16'), wherein a screwing profile (22) is formed on the measuring capsule (20) or on a retaining element for securing the measuring capsule (20) in the connection housing (18), and wherein the measuring capsule (20) comprises an end section (24) which terminates at a receding, circumferential edge (23) and which extends from the end opposite the attachment section, and wherein the maximum cross-sectional diameter of the end section (24) of the measuring capsule (20) is greater than the diameter of the circle or polygon, on which the inner edge or inner edges (7, 7') of the snap-in section or snap-in sections (9, 9') of the sealing ring (1, 1') extends or extend, so that the sealing ring (1, 1') can be moved with its first edge (11) facing forwardly in the direction of the receding, circumferential edge (23) of the measuring capsule (20), while the snap-in section or the snap-in sections (9, 9') deforms or deform in a such a manner that the angle between the snap-in section or the snap-in sections (9, 9') and a plane perpendicular to the axis (25) of the base section (12) increases and the snap-in section or the snap-in sections (9, 9') again decreases or decrease this angle upon reaching the receding, circumferential edge (23) and snaps in or snap in behind the receding, circumferential edge (23), wherein in this snapped-in position the base section (12) of the sealing ring (1, 1') covers the screwing profile (22).

## Revendications

1. Bague de plombage pour protéger une capsule de mesure (20) d'un débitmètre (16), fixée dans un boîtier de raccordement (18), contre un démontage non autorisé, comprenant :
- une section de base (12) en forme de bague circulaire pour recouvrir un profilage fileté (22) d'une capsule de mesure (20) ou un profilage fileté d'une bague de fixation pour fixer une capsule de mesure, dans laquelle la section de base (12) s'étend d'un premier bord (11) à un second bord (26), qui est distant du premier bord (11) le long de l'axe (25) de la section de base (12),
**caractérisé en ce que** la bague de plombage présente en outre :
- une section d'encliquetage (9, 9') en forme de segment annulaire,
- qui part du second bord (26) de la section de base (12) et s'écarte du premier bord (11) et du second bord (26) de la section de base (12) en oblique en direction de l'axe (25) de la section de base (12), et
- dont le bord interne (7, 7'), opposé au second bord (26) de la section de base (12), représente les parties proches de l'axe de la bague de plombage (1, 1') et s'étend sur un cercle ou sur le bord d'un polygone régulier, qui s'étend perpendiculairement à l'axe (25) de la section de base (12) et qui est concentrique avec la section de base (12), et
- au moins une zone d'affaiblissement (13) formée dans la bague de plombage (1, 1'), zone qui est détruite de manière irréversible dans le cas où une force axiale prédéterminée agissant en direction de la section de base (12) est exercée sur les bords internes (7, 7') des sections d'encliquetage (9, 9').

2. Bague de plombage selon la revendication 1, qui présente au moins deux sections d'encliquetage (9, 9') en forme de segments annulaires distantes l'une de l'autre dans la direction périphérique de la section de base (12),
- sections qui partent respectivement du second bord (26) de la section de base (12) et s'écartent du premier bord (11) et du second bord (26) de la section de base (12) en oblique en direction de l'axe (25) de la section de base (12), et
- dont les bords internes (7, 7'), opposés au second bord (26) de la section de base (12), représentent les parties proches de l'axe de la bague de plombage (1, 1') et s'étendent sur le cercle ou sur le bord du polygone régulier.

3. Bague de plombage selon la revendication 1 ou 2, qui est formée d'un seul tenant.

4. Bague de plombage selon l'une quelconque des revendications précédentes, qui est formée d'un matériau synthétique.

5. Bague de plombage selon l'une quelconque des revendications précédentes, qui est formée d'un matériau élastique.

6. Bague de plombage selon la revendication 5, qui est formée d'un matériau fragile.

7. Bague de plombage selon l'une quelconque des revendications précédentes, dans laquelle la section de base (12) présente une section (2) en forme de cylindre creux ou de cône creux ayant une section transversale circulaire.

8. Bague de plombage selon la revendication 7, dans laquelle un bord périphérique de la section (2) en forme de cylindre creux ou de cône creux forme le second bord de la section de base.

9. Bague de plombage selon la revendication 7, dans laquelle une section annulaire (10) périphérique s'écartant du premier bord (11) de la section de base (12) en oblique en direction de l'axe (25) de la section de base (12), section dont le bord interne (26), opposé à la section (2) en forme de cylindre creux ou de cône creux, forme le second bord (26) de la section de base (12), part d'un bord périphérique (5) de la section (2) en forme de cylindre creux ou de cône creux.

10. Bague de plombage selon la revendication 9, dans laquelle chaque section d'encliquetage (9, 9') représente un prolongement aligné de la section annulaire (10) dirigé radialement vers l'intérieur.

11. Bague de plombage selon l'une quelconque des revendications 7 à 10, dans laquelle, entre la section (2) en forme de cylindre creux ou de cône creux et le premier bord (11) de la section de base (12), il n'y a aucune zone qui ait un diamètre en section transversale plus petit que celui de la section (2) en forme de cylindre creux ou de cône creux et dans laquelle la section (2) en forme de cylindre creux ou de cône creux ne présente aucune saillie dirigée vers l'intérieur.

12. Bague de plombage selon l'une quelconque des revendications précédentes, dans laquelle le premier bord (11) et/ou le second bord (26) est ou sont circulaires et s'étend(ent) dans un plan perpendiculaire à l'axe (25) de la section de base (12).

13. Bague de plombage selon l'une quelconque des revendications 2 à 12, dans laquelle toutes les sections d'encliquetage (9, 9') ont des dimensions identiques.

14. Bague de plombage selon l'une quelconque des revendications précédentes, dans laquelle l'angle entre chaque section d'encliquetage (9, 9') et un plan perpendiculaire à l'axe (25) de la section de base (12) est compris entre 10 ° et 45°.

15. Bague de plombage selon l'une quelconque des revendications précédentes, dans laquelle, dans au moins une des zones d'affaiblissement (13), une ouverture (14) est formée dans la bague de plombage (1, 1').

16. Bague de plombage selon l'une quelconque des revendications précédentes, dans laquelle chacune des zones d'affaiblissement (13) est une zone allongée d'épaisseur réduite de la bague de plombage (1, 1') s'étendant dans la direction axiale du premier bord (11) de la section de base au bord interne (7, 7') d'une section d'encliquetage (9, 9').

17. Bague de plombage selon l'une quelconque des revendications précédentes, dans laquelle les bords internes (7, 7') des sections d'encliquetage (9, 9') recouvrent au moins 95 % du pourtour du cercle ou du polygone sur lequel ils s'étendent.

18. Bague de plombage selon l'une quelconque des revendications précédentes, dans laquelle le second bord (26) de la section de base (12) comprend les zones proches de l'axe de la section de base (12).

19. Combinaison constituée d'une bague de plombage (1, 1') selon l'une quelconque des revendications 1 à 18 et d'une capsule de mesure (20), qui a, à une extrémité, une section de fixation destinée à sa fixation dans un boîtier de raccordement (18) d'un débitmètre (16, 16'), dans laquelle un profilage fileté (22) est formé sur la capsule de mesure (20) ou sur un élément de fixation destiné à la fixation de la capsule de mesure (20) dans le boîtier de raccordement (18) et la capsule de mesure (20) présente une section d'extrémité (24) partant d'une extrémité en regard de la section de fixation, qui se termine sur un bord périphérique (23) en retrait, et dans laquelle le diamètre maximal en section transversale de la section d'extrémité (24) de la capsule de mesure (20) est supérieur au diamètre du cercle ou du polygone, sur lequel le ou les bords internes (7, 7') de la ou des sections d'encliquetage (9, 9') de la bague de plombage (1, 1') s'étend ou s'étendent de sorte que la bague de plombage (1, 1') puisse être pressée par son premier bord (11) en avant en direction du bord périphérique (23) en retrait sur la capsule de mesure (20), tandis que la ou les sections d'encliquetage (9, 9') est ou sont tordues de sorte que l'angle entre la ou les sections d'encliquetage (9, 9') et un plan perpendiculaire à l'axe (25) de la section de base (12) augmente et que la ou les sections d'encliquetage (9, 9') réduise(nt) à nouveau cet angle lorsque le bord périphérique (23) en retrait est atteint et s'engage(nt) par encliquetage derrière le bord périphérique (23) en retrait, où, dans une telle position encliquetée, la section de base (12) de la bague de plombage (1, 1') recouvre le profilage fileté (22).
